# NEUE EUROPÄISCHE PATENTSCHRIFT

(11) **EP 3 071 860 B2**
(45) Veröffentlichungstag und Bekanntmachung des Hinweises auf die Entscheidung über den Einspruch: **20.08.2025**
(45) Hinweis auf die Patenterteilung: 15.01.2020
(21) Anmeldenummer: 14799498.2
(22) Anmeldetag: 19.11.2014
(51) Int. Cl.: F16D 65/092, F16D 65/00

(54) **REIBBELAGANORDNUNG FÜR EINE SCHEIBENBREMSE**
FRICTION LINING ARRANGEMENT FOR A DISK BRAKE
ENSEMBLE GARNITURE DE FRICTION POUR FREIN À DISQUE

(30) Priorität: 21.11.2013 DE 102013223862; 20.03.2014 DE 102014205232
(43) Veröffentlichungstag der Anmeldung: 28.09.2016
(73) Patentinhaber: Continental Automotive Technologies GmbH, 30175 Hannover (DE)
(72) Erfinder: KÜMMEL, Kurt, 64625 Bensheim (DE); KEIL, Christoph, 64658 Fürth (DE); MARSCHNER, Holger, 61440 Oberursel (DE); PIEHLER, Christian, 60488 Frankfurt (DE); SOCOLOV, Silviu, 61137 Schöneck (DE)
(74) Vertreter: 2s-ip Schramm Schneider Bertagnoll Patent- und Rechtsanwälte Part mbB
(86) Internationale Anmeldenummer: PCT/EP2014/075062
(87) Internationale Veröffentlichungsnummer: WO 2015/075095

(56) Entgegenhaltungen:
- EP-A1- 2 174 034
- EP-B1- 0 380 769
- WO-A1-02/12747
- WO-A1-03/091595
- DE-A1- 10 305 308
- DE-A1- 102010 037 034
- DE-A1- 19 524 736
- DE-A1- 3 918 369
- US-A1- 2006 266 599
- US-A1- 2012 111 693
- VRI e.V. - Scheibenbremsbeläge; 2006

## Beschreibung

Die Erfindung betrifft eine Reibbelaganordnung für eine Scheibenbremse nach dem Oberbegriff vom Patentanspruch 1.

Bei Bremsvorgängen treten stets Schwingungen in einem gewissen Maße auf. Die Schwingungen werden durch intermittierenden Reibungseingriff zwischen Reibwerkstoff und Bremsscheibe in eine Struktur induziert, welche zum Schwingen angeregt wird. In Abhängigkeit von den herrschenden Bedingungen im Einzelfall können dadurch resultierend Geräusche auftreten, die als komfortmindernde Erscheinung unerwünscht sind. Neben den mechanischen Auswirkungen, wie Lenkunruhe oder Schwingungen an Karosseriebauteilen, werden die akustischen Auswirkungen besonders unangenehm empfunden. Durch eine starr platzierte Zusatzmasse kann eine schwingungstechnische "Verstimmung" des Systems erzielt werden. Dabei schwingt die Zusatzmasse gemeinsam mit der Reststruktur in Amplitude und Frequenz. Ein Nachteil besteht darin, dass die Zusatzmasse verhältnismäßig groß bemessen werden muss, also Gewichtsnachteile verursacht.

Der Erfindung liegt daher die Aufgabe zu Grunde eine günstigere und effizientere Geräuschminderung zu ermöglichen, die die Fahrzeugmasse nicht unnötig vergrößert und auch vorteilhafte Herstellungsverfahren eröffnet, ohne die Gebrauchseigenschaften und Bauraumanforderungen einer Fahrzeugscheibenbremse zu beeinträchtigen.

Gemäß DE 39 18 369 A1 und EP 380 769 B1wird eine Scheibenbremse mit wenigstens einem schwingungsverändernden Element vorgeschlagen, um Bremsgeräusche zu verhindern. Insbesondere wird eine Maßnahme vorgeschlagen die eine Bremsbacke mit hammerkopfförmigen Fortsetzungen betrifft. An der hammerkopfförmigen Fortsetzung der Rückenplatte ist demnach wenigstens eine Zusatzmasse starr platziert. Dazu dient ein Rundstahl, der in einer Bohrung durch ein Zentrum vom Hammerkopf befestigt ist, so dass Eigenfrequenzen verstimmt bzw. gegeneinander verschoben werden können und im Idealfall so eingestellt werden, dass sie sich gegenseitig nicht verstärken. Die Befestigung vom Rundstahl erfolgt beispielsweise durch Kleben, Nieten, Einpressen, Schweißen oder Einschrauben in die Bohrung der Rückenplatte. Obwohl die genannte Merkmalskombination grundsätzlich günstig realisierbar ist, wird eine weiter verbesserte Lösung für die neuartigen Scheibenbremsen nachgefragt, deren Schwingungsanregung auf veränderten Randbedingungen beruht.

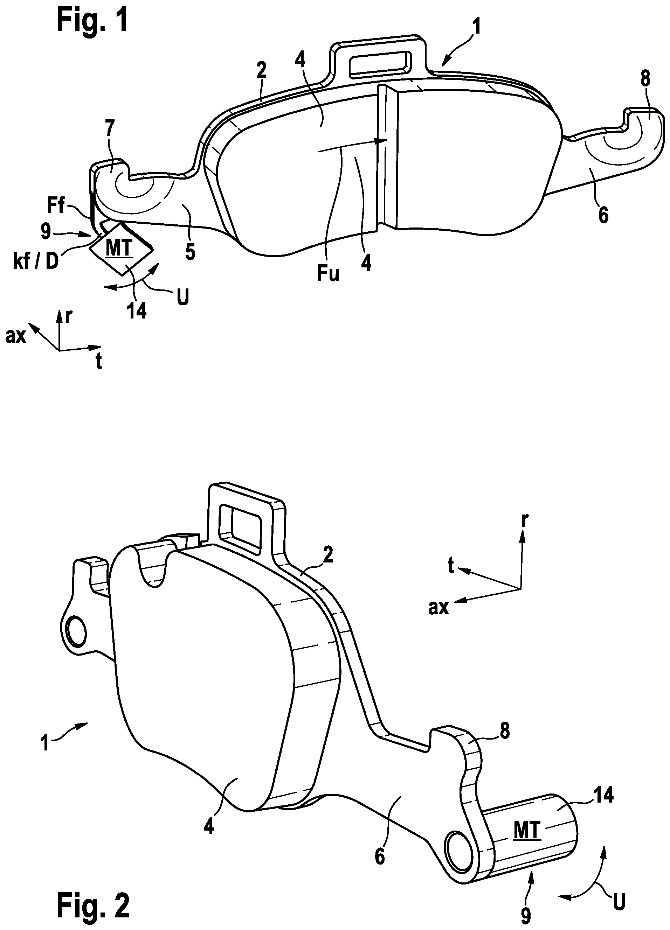

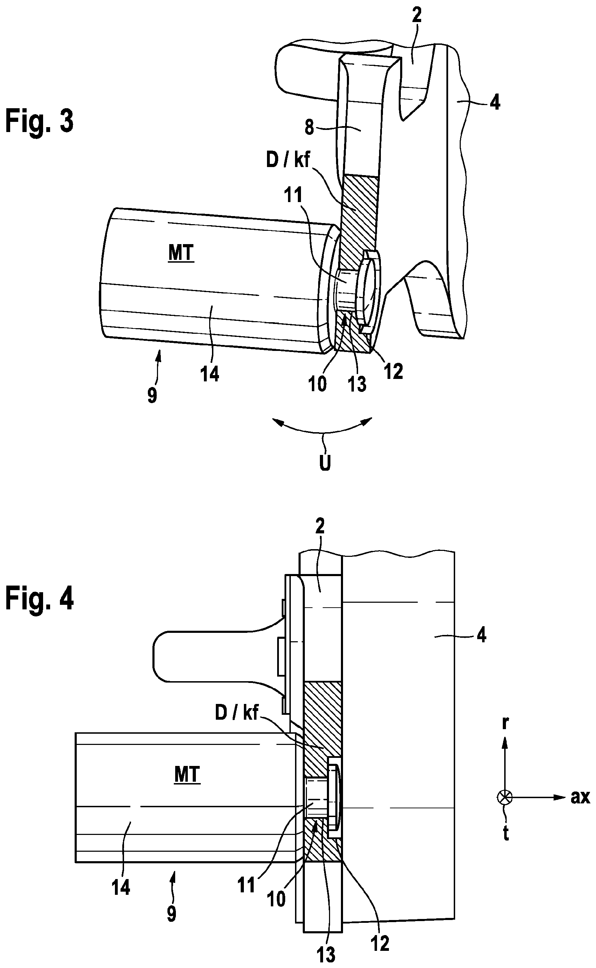

Zur Geräuschbekämpfung bei neuartigen Reibbelaganordnungen, sowie bei den entsprechend ausgebildeten Scheibenbremsen, schlägt die Erfindung daher ein neuartiges, gesondert zur Struktur schwingfähiges, Tilgersystem mit den Merkmalen der Merkmalskombination des Patentanspruchs 1 vor. Die vorgeschlagene Maßnahme dient dem Ziel, geräuschrelevante Schwingungen in Umfangsrichtung und/oder axialer oder sonstiger Schwingungsebene in einem vorgegebenen Frequenzbereich zumindest zu reduzieren oder möglichst gänzlich zu beseitigen, indem der schwingenden Struktur Energie entzogen wird, weil gleichzeitig ein Tilgersystem gesondert angeregt wird. Dazu ist an der Struktur (Reibbelag) einer Gesamtmasse ein neuartiges Tilgersystem T vorgesehen, das eine Feder mit einer vorbestimmten Federsteifigkeit sowie der daran aufgehängten, vorbestimmten Teilmasse umfasst, welche aufeinander abgestimmt sind, und durch einen schlanken Schenkel gesondert von der Struktur S elastisch schwingfähig an der Struktur angeordnet ist. Dieses neuartige Tilgersystem umfasst eine Federfunktion (e.g. im Schenkel SL integriert) und eine Masse. Es dient zur Auslöschung einer bestimmten störenden Frequenz/Frequenzbands der Struktur S. Das Tilgersystem kann an einer Komponente der Struktur S integriert, also einstückig daran, vorgesehen sein oder alternativ ist das Tilgersystem T als gesonderte Baugruppe an der Struktur befestigt wie in Fig. 2-6 gezeigt. Die Wirkungsweise dieses Tilgersystems beruht auf dem Grundprinzip, dass die Masse des Tilgersystem durch die Erregung anhand von der zu bekämpfenden, definierten Frequenz/Frequenzbands eine gesonderte, erzwungene Schwingung mit einer gesonderten Amplitude ausführt, während der Schwingung der Struktur durch die Anregung des Tilgersystems Schwingungsenergie entzogen wird. Als Folge tritt Schwingungsauslöschung zur Ruhe oder zu einer Schwingungsamplitude AS mit untergeordneter Intensität ein. Ergänzend kann zusätzlich eine Dämpfungskomponente oder Funktion integriert vorgesehen sein, ohne die Erfindung zu verlassen.

Entsprechend ist bei einer anderen Ausführungsform der Erfindung die zusätzliche Masse am schlanken Schenkel (Verbindungsabschnitt) zwischen einen zentralen Abschnitt einer Rückenplatte und einem hammerkopfförmigen Vorsprung oder an dem hammerkopfförmigen Vorsprung platziert und gesondert dazu schwingfähig angeordnet.

Das Grundprinzip der Erfindung wie auch die Ausführungsformen im Einzelnen werden anhand der Figuren näher beschrieben.

Fig. 1 zeigt einen symmetrischen Reibbelag 1 umfassend eine Rückenplatte 2. Die Rückenplatte 2 ist weitgehend eben und verfügt über einen zentralen Abschnitt 3 mit einem weitgehend zentral darauf aufgeklebten Reibwerkstoff 4. In einer Ebene mit dem zentralen Abschnitt 3 sowie tangential seitlich abstehend davon erstrecken sich schlanke Schenkel (Verbindungsabschnitte) 5,6 welche die verdickten, hammerkopfförmigen Vorsprünge 7,8 tragen. Insbesondere sind die hammerkopfförmigen Vorsprünge 7,8 so ausgebildet, dass deren Körper nach radial außen weist, und wobei die schlanken Schenkel 5,6 die verdickten Körper der Hammerköpfe 7,8 tragen. Diese Elemente sind also gewissermaßen als rechtwinklig zueinander angeordnete Schenkel arrangiert, und beschreiben prinzipiell die Form von einem nach radial außen weisenden L. Also sind die hammerkopfförmigen Vorsprünge 7, 8 über die Schenkel 5,6 mit dem zentralen Abschnitt 3 verbunden.

Die beim Bremsen auftretenden Kräfte werden also vom zentralen Abschnitt 3 über die Schenkel 5,6 und die hammerkopfförmigen Vorsprünge 7,8 radial außen auf einen nicht gezeigten Halter eines Faustsattels oder auf ein nicht gezeigtes Halterprofil eines Festsattelgehäuses übertragen. Im Bereich der Vorsprünge 7,8 ist an der Rückenplatte 2 ein Tilgersystem 9 umfassend eine Feder-Masse-Anordnung angebracht, die durch gezielte konstruktiv vorgegebene Gestaltung einer Federsteifigkeit kF und einer entsprechend darauf abgestimmten Masse MT energetisch als Tilgersystem 9 wirksam ist, das der Struktur des Reibbelags 1 störende Schwingungsenergie entzieht. Eine einstückig integrierte Konfiguration lässt sich in besonders einfacher Weise beim Stanzprozess einer Rückenplatte 2 in einem Arbeitsgang herstellen. Abgesehen vom Materialaufwand ist dies kostenneutral, und ggf. kann Stanzabfall vermieden werden.

Die genaue Ausbildung vom Tilgersystem und dessen Funktion ist wie folgt: Um störende Schwingungen am Reibbelag 1 wirksam zu bekämpfen, müssen die Schwingungsformen, insbesondere deren Amplitude und Frequenz, bekannt sein. Die Ermittlung dieser Größen kann experimentell oder auch rechnerisch erfolgen. Das Tilgersystem wird dimensioniert und verwendet, um der Struktur Schwingungsenergie einer bestimmten Frequenz/Frequenzbands zu entziehen. Dazu wird das Tilgersystem 9, bestehend aus Tilgermasse MT und Feder kf gezielt auf die zu eliminierende Frequenz f, Amplitude A sowie Schwingungsebene/-richtung eingestellt. Die Befestigung der Masse des Tilgersystems 9 an der Struktur erfolgt im Bereich von einem Federfußpunkt Ff. Indem die Struktur im Beginn gemeinsam (mit gleicher Frequenz und Amplitude) mit dem Tilgersystem 9 schwingt, wird das Tilgersystem 9 seinerseits zu Relativschwingungen angeregt, um gesonderte Gegenschwingungen zu der Struktur auszuführen. Das Ergebnis dieser Erregung des Tilgersystems 9 ist, dass der Struktur die störgeräuschspeisende Schwingungsenergie entzogen wird, damit die (meist unhörbare) nicht störende Relativschwingung des Tilgersystems 9 ausgeführt werden kann. Entsprechend der Höhe des Energieentzugs nimmt demzufolge eine störende Schallabstrahlung der Struktur ab oder wird gänzlich ausgelöscht.

Bei der integrierten Ausgestaltung nach Fig. 1 ist das Tilgersystem 9 ein eintückiger Bestandteil von der Rückenplatte 2, der beim Herstellprozess (Stanzen) der Rückenplatte 2 ohne zusätzlichen Aufwand integral ausgebildet wird.

Tilgermasse und Tilgerfeder werden gemäß Fig. 1 durch geeignete Ausführung/Gestaltung Ihrer Geometrie so definiert, daß sich die angestrebte Eigenfrequenz in der gewünschten insbesondere tangential gerichteten Schwingungsrichtung ergibt. Die Verbindung zwischen Masse und der Struktur ist als weitgehend biegeweiche Tilgerfeder ausgelegt und definiert. Ihre Steifigkeit wird bestimmt durch einen Elastizitätsmodul vom Rückenplattenwerkstoff sowie durch die physikalischen Randbedingungen und die Geometrie der bestimmenden Größen. Die Massen und deren (Feder-)Steifigkeiten stehen in einem definierten Verhältnis zueinander, um die geforderte Anregung/Eigenfrequenz zu gewährleisten.

Weil die Rückenplatten 2 in der Regel durch Stanzen aus streifenförmigem Stahlblechwerkstoff hergestellt werden, kann das Tilgersystem 9 bei diesem Stanzvorgang einfach als ein integrierter Bestandteil der Rückenplatte 2 dargestellt werden.

In Ausgestaltung der Erfindung kann parallel zur Tilgerfeder ein Dämpfer D und oder eine Dämpferkomponente integriert eingefügt sein.

Die Raumachsen t,ax,r in den Figuren definieren Tangentialrichtung, Axialrichtung und Radialrichtung jeweils in Bezug auf eine Raddrehachse welche als die Axialrichtung normiert ist.

Die nachfolgend beschriebene Lösung des Problems nach den Figuren 2-6 beruht prinzipiell auf demselben Funktionsprinzip so dass übereinstimmende Merkmale mit übereinstimmenden Bezugsziffern versehen sind. Demzufolge wird auf die vorhergehende Beschreibung verwiesen. Nachfolgend die detaillierte Beschreibung der Unterschiede. Es handelt sich jeweils um eine mehrstückig aufgebaute Lösung wobei das Tilgersystem 9 im Wesentlichen Zentral oder endseitig vom Schenkel 5,6 und gesondert zur Struktur S schwingfähig platziert ist. Jedes Tilgersystem 9 ist jeweils in einer Durchgangsbohrung 10 der Rückenplatte 2 mit einem dünnen Befestigungszapfen 11 so befestigt, insbesondere taumelvernietet, dass eine Axialrichtung ax vom Tilgersystem 9 prinzipiell axial gerichtet also parallel zu einer Raddrehachse sowie weitgehend zentral in dem Schenkel 5, 6 arrangiert ist. Die Durchgangsbohrung 10 ist gestuft ausgebildet wobei deren erweiterter Durchmesserabschnitt 12 über mindestens etwa das 1,1fache von einem einfachen Durchmesserabschnitt 13 verfügt.

Gleichzeitig befindet sich der erweiterte Durchmesserabschnitt 12 mit der Befestigung vom Befestigungszapfen 11 auf der Reibelagseite der Rückenplatte 2. Das Tilgersystem 9 ist dadurch gesondert schwingfähig auf einer reibbelagabgewandten Seite der Rückenplatte 2 platziert. Durch die räumliche Nähe vom Tilgersystem 9, in Relation zu dem zentralen Abschnitt 3, ist der Energietransfer optimiert. Dadurch ist das Tilgersystem 9 besonders effizient, leicht und bauraumsparend.

Obwohl durch den schlanken Schenkel 5,6 prinzipiell ausreichend Schwingfähigkeit und Eigenelastizität für Schwingungen vom Tilgersystem 9 (Schwingung U) bevorzugt um die Radialrichtung r (Hochachse) zur Verfügung gestellt wird, ist es zusätzlich denkbar, zwischen dem Tilgersystem 9 und der Rückenplatte 2 zusätzlich eine weitere Elastizität wie beispielsweise eine Wellfeder oder eine Einlage/Zwischenlage aus einem elastischen Werkstoff wie insbesondere Klebstoff, Kunststoff- oder Elastomer vorzusehen. Dadurch wird es insbesondere ermöglicht, dass das Tilgersystem 9 auch um andere oder zusätzliche Achsen als nur die Radialrichtung r schwingfähig ist/wird.

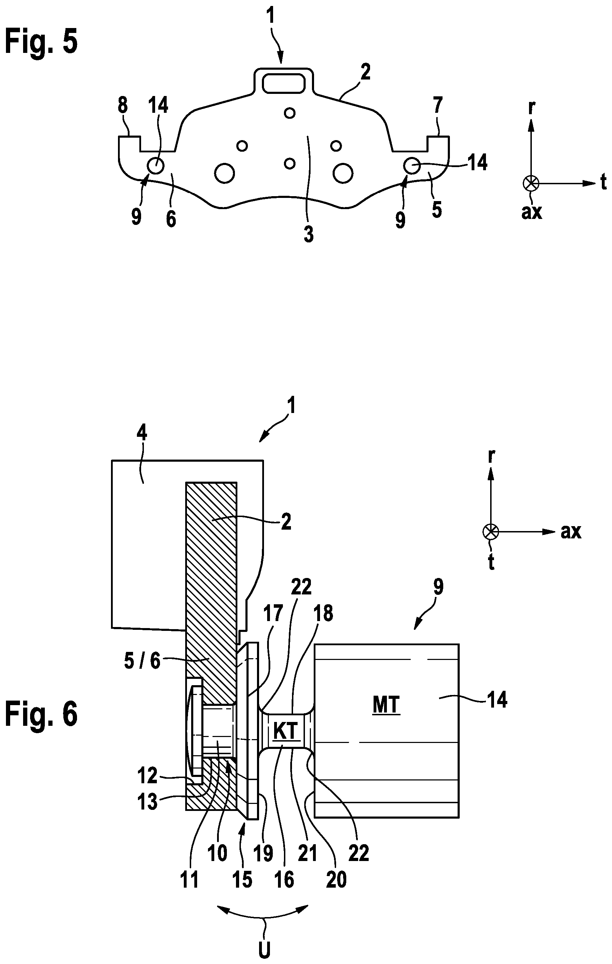

Figur 6 zeigt die Ausführungsform nach der Erfindung. Die Fig. 6 basiert auf einer derartigen, zusätzlichen Elastizität ohne Vorzugsorientierung und ermöglicht eine besonders wirksame und gleichzeitig leichtgewichtige also ökonomische Variante anhand einer besonderen Schnittstelle zwischen Tilgersystem 9 und Rückenplatte 2. Diese besonders flexible Anbindung der Tilgermasse MT kann im Vergleich mit den Lösungen nach den Figuren 1-5 mit reduziertem Gewicht ausgebildet werden. Dabei verfügt der Tilgerkörper 14 über einen verdickten Fuß 15 mit einem Absatz 17 zur Befestigung an der Rückenplatte 2, und wobei Tilgerkörper 14 und Fuß 15 über einen besonders elastischen, als Rundzapfen gestalteten Verbindungsabschnitt 16 miteinander verbunden sind. Dieser symmetrische und besonders dünne Rundzapfen ermöglicht dabei Schwingungen, ohne eine Vorzugsorientierung vorzugeben. Beispielsweise ist das Tilgersystem 9 als achssymmetrisches, zylindrisches Drehteil aus einem Rundstahl gefertigt wobei der Verbindungsabschnitt 16 durch eine in Radialrichtung eingestochene Nut 18 umfassend Nutflanken 19, 20 und einen Nutgrund 21 ausgebildet ist. In einem Übergangsbereich zwischen Nutflanken 19, 20 und Nutgrund 21 ist jeweils eine Abrundung mit einem Radius 22 vorgesehen.

Abwandlungen der Erfindung sind möglich, wobei auch verschiedenste Merkmalskombinationen oder Mischformen zwischen den offenbarten Ausführungsformen denkbar sind, ohne den Grundgedanken der Erfindung zu verlassen.
- 1: Reibbelag
- 2: Rückenplatte
- 3: zentraler Abschnitt
- 4: Reibwerkstoff
- 5: Schenkel
- 6: Schenkel
- 7: Vorsprung
- 8: Vorsprung
- 9: Tilgersystem
- 10: Durchgangsbohrung
- 11: Befestigungszapfen
- 12: Durchmesserabschnitt
- 13: Durchmesserabschnitt
- 14: Tilgerkörper
- 15: Fuß
- 16: Verbindungsabschnitt
- 17: Absatz
- 18: Nut
- 19, 20: Nutflanken
- 21: Nutgrund
- 22: Radius

- MT: Tilgermasse
- D: Dämpfer
- kf: Federsteifigkeit
- Ff: Federfußpunkt
- Fu: Umfangskraft (Reibkraft)
- ax: Axialrichtung (parallel zur Raddrehachse)
- r: Radialrichtung
- t: Tangentialrichtung
- U: Schwingung

## Patentansprüche

1. Reibbelag (1) mit einer Masse umfassend eine Rückenplatte (2) mit zentralem Abschnitt (3) der über Schenkel (5, 6) mit hammerkopfförmigen Vorsprüngen (7,8) sowie an der Rückenplatte (2) befestigten Reibwerkstoff (4) zur Anlage an einem Reibring vorgesehen ist, und wobei die Vorsprünge (7,8) zur tangential festen Halterung sowie zur axial verschiebbaren Führung in Widerlager eingreifen, so dass eine Einleitung einer tangential gerichteten Umfangskraft (Fu, Reibkraft) in die Widerlager eine Zugbeanspruchung in wenigstens einem Vorsprung (7,8) induziert, ein Tilgersystem (9) zur Auslöschung von unerwünschten Schwingungen an dem Reibbelag (1) angeordnet ist, wobei das Tilgersystem (9) als eine gesonderte Komponente ausgebildet ist, die schwingfähig an der Rückenplatte (2) fixiert ist, das Tilgersystem (9) als ein einstückiger oder mehrstückiger Bestandteil von der Rückenplatte (2) integriert vorgesehen ist, und das Tilgersystem (9) einen Tilgerkörper (14) mit einer definierten Masse MT aufweist, der mit einer definierten Federsteifigkeit kT derart schwingfähig an der Rückenplatte (2) elastisch aufgehängt ist, dass der Struktur/ Reibbelag (1) durch Schwingungsanregung des Tilgerkörpers (14) Energie entzogen wird, wobei das Tilgersystem (9) an einem hammerkopf förmigen Vorsprung (7, 8) der Rückenplatte (2), wie insbesondere im Zentrum vom schlanken Schenkel (5,6), angeordnet ist welcher den hammerkopfförmigen Vorsprung (7,8) mit dem zentralen Abschnitt (3) der Rückenplatte (2) verbindet, **dadurch gekennzeichnet, dass** das Tilgersystem (9) einstückig aus dem Tilgerkörper (14) und aus einem Fuß (15) zur Befestigung an der Rückenplatte (2) aufgebaut ist, und wobei Tilgerkörper (14) und Fuß (15) über einen elastischen Verbindungsabschnitt (16) miteinander verbunden sind, wobei der Verbindungsabschnitt (16) durch eine Nut (18) umfassend Nutflanken (19,20) und Nutgrund (21) gebildet ist, und dass ein Übergangsbereich zwischen Nutflanken (19,20) und Nutgrund (21) abgerundet mit einem Radius (22) vorgesehen ist.

2. Reibbelag (1), nach Anspruch 1, **dadurch gekennzeichnet, dass** dem Tilgersystem (9) zusätzlich ein Dämpfer D und/oder eine Dämpferkomponente zugeordnet ist.

3. Reibbelag (1), nach Anspruch 1, **dadurch gekennzeichnet, dass** der Fuß (15) vom Tilgersystem (9) mit wenigstens einem Absatz (17) zur Auflage auf der Rückenplatte (2) versehen ist, und dass von dem Absatz (17) ein Befestigungszapfen (11) axial vorspringt, welcher eine Durchgangsbohrung (10) der Rückenplatte (2) durchgreift, und dass ein freies Ende von dem Befestigungszapfen (11) zwecks formschlüssiger Befestigung vom Tilgersystem (9) verdickt, insbesondere taumelvernietet, ausgebildet ist.

4. Reibbelag (1), nach Anspruch 3, **dadurch gekennzeichnet, dass** die Durchgangsbohrung (10) als Stufenbohrung koaxial zum Befestigungszapfen (11) ausgebildet ist, wobei ein erster Durchmesserbereich (13) der Stufenbohrung den Befestigungszapfen (11) aufnimmt und wobei ein zweiter Durchmesserbereich (12) das verdickte Ende vom Befestigungszapfen (11) aufnimmt, und wobei der zweite Durchmesserbereich (12) mindestens etwa 1,1 - fach größer als der erste Durchmesserbereich (13) ausgeführt ist.

5. Reibbelag (1), nach Anspruch 4, **dadurch gekennzeichnet, dass** der zweite Durchmesserbereich (12) an der Rückenplatte (2) reibbelagseitig arrangiert ist.

6. Reibbelag (1), nach einem oder mehreren der Ansprüche 1 + 3 - 5, **dadurch gekennzeichnet, dass** zwischen Tilgersystem (9) und Rückenplatte (2) wenigstens eine definierte Elastizität vorgesehen wie insbesondere elastisch eingespannt ist.

7. Reibbelag (1), nach einem oder mehreren der vorhergehenden Ansprüche, **dadurch gekennzeichnet, dass** das Tilgersystem (9) etwa zentrisch am schlanken Schenkel (5,6) oder am hammerkopfförmigen Vorsprung (7,8) platziert angeordnet ist.

## Claims

1. Friction lining (1) with a mass comprising a back plate (2) with central portion (3) which is provided via limbs (5,6) with hammer head-shaped projections (7,8) and friction material (4) fastened to the back plate (2) for bearing on a friction ring, and wherein the projections (7,8) engage in counter bearings for tangentially fixed holding and for axially displaceable guidance so that an introduction of a tangentially directed circumferential force (Fu, friction force) into the counter bearings induces a tensile load in at least one projection (7,8), an absorber system (9) being arranged on the friction lining (1) in order to eliminate undesirable vibrations, wherein the absorber system (9) is formed as a separate component which is fixed on the back plate (2) so as to be able to vibrate, the absorber system (9) is provided as a one-piece or multi-piece component of the back plate (2) in an integrated manner, and the absorber system (9) has an absorber body (14) with a defined mass MT which is elastically suspended with a defined spring rigidity kT so that it can vibrate on the back plate (2) such that energy is removed from the structure/friction lining (1) by vibration stimulation of the absorption body (14), wherein the absorber system (9) is arranged on a hammer head-shaped projection (7,8) of the back plate (2), such as in particular in the centre of the slim limb (5,6), which limb connects the hammer head-shaped projection (7,8) to the central portion (3) of the back plate (2), **characterized in that** the absorber system (9) is constructed in one piece from the absorber body (14) and from a foot (15) for fastening to the back plate (2), and wherein absorber body (14) and foot (15) are connected to one another via an elastic connecting portion (16), wherein the connecting portion (16) is formed by a groove (18) comprising groove flanks (19, 20) and groove base (21), and that a transition region between groove flanks (19, 20) and groove base (21) is provided in a rounded manner with a radius (22).

2. Friction lining (1) according to Claim 1, **characterized in that** the absorber system (9) is additionally assigned a damper D and/or a damper component.

3. Friction lining (1) according to Claim 1, **characterized in that** the foot (15) of the absorber system (9) is provided with at least one shoulder (17) for resting on the back plate (2) and that a fastening pin (11) projects axially from the shoulder (17) and engages through a through-bore (10) of the back plate (2) and that a free end of the fastening pin (11) is formed to be thickened, in particular wobble riveted, for the purpose of positive-locking fastening of the absorber system (9).

4. Friction lining (1) according to Claim 3, **characterized in that** the through-bore (10) is formed as a stepped bore coaxially to the fastening pin (11), wherein a first diameter region (13) of the stepped bore accommodates the fastening pin (11) and wherein a second diameter region (12) accommodates the thickened end of the fastening pin (11), and wherein the second diameter region (12) is embodied to be at least approximately 1.1 times larger than the first diameter region (13).

5. Friction lining (1) according to Claim 4, **characterized in that** the second diameter region (12) is arranged on the back plate (2) on the friction lining side.

6. Friction lining (1) according to one or more of Claims 1 + 3-5, **characterized in that** at least one defined elasticity is provided between absorber system (9) and back plate (2), such as in particular elastically clamped.

7. Friction lining (1) according to one or more of the preceding claims, **characterized in that** the absorber system (9) is arranged placed approximately centrally on the slim limb (5,6) or on the hammer head-shaped projection (7,8).

## Revendications

1. Garniture de friction (1) pourvue d'une masse, ladite garniture de friction comprenant une plaque arrière (2) pourvue d'une portion centrale (3) qui est destinée à venir en appui sur une bague de friction par le biais de branches (5, 6), pourvues de saillies (7, 8) en forme de tête de marteau, et d'un matériau de friction (4) fixé à la plaque arrière (2), et les saillies (7, 8) s'engageant dans des butées pour le support tangentiellement fixe et le guidage à coulissement axial de sorte qu'une introduction d'une force périphérique (Fu, force de friction) dirigée tangentiellement dans les butées induise une contrainte de traction dans au moins une saillie (7, 8), un système d'amortissement (9) est disposé au niveau de la garniture de friction (1) pour éliminer des vibrations indésirables, le système d'amortissement (9) étant conçu comme un composant séparé qui est fixé à la plaque arrière (2) de manière oscillante, le système d'amortissement (9) étant prévu pour être intégré sous la forme d'un composant d'une seule pièce ou en plusieurs pièces de la plaque arrière (2) et le système d'amortissement (9) comportant un corps d'amortissement (14), de masse définie MT**,** qui est suspendu élastiquement, avec une raideur définie kT, de manière oscillante à la plaque arrière (2) de manière à retirer de l'énergie de la structure/garniture de friction (1) par excitation en oscillation du corps d'amortissement (14), le système d'amortissement (9) étant disposé au niveau d'une saillie (7, 8) en forme de tête de marteau de la plaque arrière (2), comme en particulier au centre de la branche mince (5, 6) qui relie la saillie (7, 8) en forme de tête de marteau à la portion centrale (3) de la plaque arrière (2), **caractérisée en ce que** le système d'amortissement (9) est formé d'une pièce à partir du corps d'amortissement (14) et d'un pied (15) destiné à être fixé à la plaque arrière (2), et le corps d'amortissement (14) et le pied (15) étant reliés entre eux par une portion de liaison élastique (16), la portion de liaison (16) étant formée par une gorge (18) comprenant des flancs de gorge (19, 20) et un fond de gorge (21), et **en ce qu'**une région de transition entre les flancs de gorge (19, 20) et le fond de gorge (21) est prévue qui est arrondie avec un rayon (22).

2. Garniture de friction (1) selon la revendication 1, **caractérisée en ce que** le système d'amortissement (9) est en outre associé à un amortisseur D et/ou un composant amortisseur est associé au système absorbeur.

3. Garniture de friction (1) selon la revendication 1, **caractérisée en ce que** le pied (15) du système d'amortissement (9) est pourvu d'au moins un épaulement (17) destiné à venir en appui sur la plaque arrière (2), et **en ce qu'**une tige de fixation (11) fait saillie axialement de l'épaulement (17), laquelle s'engage à travers un trou traversant (10) de la plaque arrière (2) et **en ce qu'**une extrémité libre de la tige de fixation (11) est conçue de manière à être épaissie, en particulier rivetée par fluage, en vue de la fixation par complémentarité de formes du système d'amortissement (9).

4. Garniture de friction (1) selon la revendication 3, **caractérisée en ce que** le trou traversant (10) est conçu comme un alésage étagé coaxial à la tige de fixation (11), une première région de diamètre (13) de l'alésage étagé recevant la tige de fixation (11) et une deuxième région de diamètre (12) recevant l'extrémité épaissie de la tige de fixation (11), et la deuxième région de diamètre (12) étant au moins environ 1,1 fois plus grande que la première région de diamètre (13).

5. Garniture de friction (1) selon la revendication 4, **caractérisée en ce que** la deuxième région de diamètre (12) est disposée sur la plaque arrière (2) du côté de la garniture de friction.

6. Garniture de friction (1) selon l'une au moins des revendications 1+3 à 5, **caractérisée en ce qu'**au moins une élasticité définie est prévue, notamment conférée élastiquement, entre le système d'amortissement (9) et la plaque arrière (2).

7. Garniture de friction (1) selon l'une au moins des revendications précédentes, **caractérisée en ce que** le système d'amortissement (9) est disposé de manière approximativement centrée sur la branche mince (5, 6) ou sur la saillie (7, 8) en forme de tête de marteau.
